# EUROPÄISCHE PATENTSCHRIFT

(11) **EP 1 347 895 B1**
(45) Veröffentlichungstag und Bekanntmachung des Hinweises auf die Patenterteilung: **03.08.2005**
(21) Anmeldenummer: 01272610.5
(22) Anmeldetag: 16.11.2001
(51) Int. Cl.: B60S 1/40

(54) **VORRICHTUNG ZUM LÖSBAREN VERBINDEN EINES WISCHBLATTS MIT EINEM WISCHERARM**
DEVICE FOR DETACHABLY LINKING A WIPER BLADE WITH A WIPER ARM
DISPOSITIF DE FIXATION AMOVIBLE D'UN BALAI D'ESSUIE-GLACE SUR UN BRAS D'ESSUIE-GLACE

(30) Priorität: 28.12.2000 DE 10065124; 26.10.2001 WO PCT/DE01/04024
(43) Veröffentlichungstag der Anmeldung: 01.10.2003
(60) Teilanmeldung: 04018072.1
(73) Patentinhaber: ROBERT BOSCH GMBH, 70442 Stuttgart (DE)
(72) Erfinder: WEBER, Matthias, 76534 Baden-Baden (DE); RAPP, Harald, 77815 Buehl (DE); KRAEMER, Godelieve, 76549 Huegelsheim (DE); MAYER, Juergen, 76571 Gaggenau (DE); LEUTSCH, Wolfgang, 77830 Buehlertal (DE); BASEOTTO, Michel, B-3550 Hasselt (BE); HERINCKX, Dirk, B-3350 Linter (BE); DE BLOCK, Peter, B-3545 Halen (BE); VERELST, Hubert, B-3300 Tienen (BE); HOLSBEEKX, Philippe, B-3300 Tienen (BE); BREESCH, Frans, B-3840 Borgloon (BE); WINDMOLDERS, Eric, B-3510 Kermt (BE); WILMS, Christian, B-3582 Beringen-Koersel (BE); OP'T ROODT, Inigo, B-3500 Hasselt (BE); BEELEN, Hans, B-3540 Herk-de-Stad (BE); VERTONGEN, Robert, B-3800 Sinteruiten (BE); GELING, Johnny, B-3010 Kessel-Lo (BE)
(86) Internationale Anmeldenummer: PCT/DE2001/004272
(87) Internationale Veröffentlichungsnummer: WO 2002/053421

(56) Entgegenhaltungen:
- WO-A-99/02380
- WO-A-99/02383
- DE-B- 1 077 087
- US-A- 2 176 373
- US-A- 3 431 579

## Beschreibung

### Stand der Technik

Die Erfindung betrifft eine Verbindungsvorrichtung und ein Wischblatt nach der Gattung der unabhängigen Patentansprüche. Bei dem angesprochenen Wischblatt soll das Tragelement für das gesamte vom Wischblatt bestrichene Wischfeld eine möglichst gleichmäßige Verteilung des vom Wischerarm ausgehenden Wischblatt-Anpressdrucks an der Scheibe gewährleisten. Durch eine entsprechende Krümmung des unbelasteten Tragelements - also wenn das Wischblatt nicht an der Scheibe anliegt - werden die Enden der im Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muss also etwas stärker sein als die im Wischfeld der zu wischenden Scheibe gemessene stärkste Krümmung. Das Tragelement ersetzt somit die aufwendige Tragbügelkonstruktion mit zwei in der Wischleiste angeordneten der Querversteifung der gummielastischen Wischleiste dienenden Federschienen, wie sie bei herkömmlichen Wischblättern (DE 1505397 A1) praktiziert wird. Ein Wischblatt mit einem solchen Tragelement soll auf einfache Weise unverlierbar an dem Wischerarm angeschlossen und von diesen wieder abgenommen werden können.

Um ein derartig ausgebildetes Wischblatt mit dem Wischerarm zu verbinden, muss dieses mit einem besonders ausgebildeten Anschlußelement versehen werden, mit dem es in der erforderlichen Weise am Wischerarm angeschlossen werden kann. Die Wandflächen des Anschlußelements sollen darüber hinaus für eine ordnungsgemäße Führung des Wischblatts sorgen, wenn es von dem Wischerarm quer zu seiner Längserstreckung über die zu wischende Scheibe verschoben wird, weil diese an Führungsflächen des Wischerarms anliegen. Da die in aller Regel sphärisch gekrümmte Windschutzscheibe eines Kraftfahrzeugs nicht den Abschnitt einer Kugeloberfläche darstellt, muss sich das Wischblatt gegenüber dem Wischerarm während seiner Wischbewegung ständig der jeweilige Lage und dem Verlauf der Scheibenoberfläche anpassen können. Deshalb ist die, eine Schwingbewegung um die Gelenkzapfenachse ermöglichende, leichtgängige Gelenkverbindung zwischen dem Wischerarm und dem Wischblatt notwendig.

Die Erfindung geht aus von einer Verbindungsvorrichtung und einem Wischblatt nach der Gattung der Ansprüche 1 und 19 Bei einer bekannten Vorrichtung dieser Art (DE 19 72 9862.1A1) sind die beiden Gelenkzapfen an ihren Mantelflächen jeweils mit zwei einander gegenüberliegenden Flächen versehen. Dadurch ist es möglich das Wischblatt mit diesen Zapfen in Lagerausnehmung des Wischerarms einzubringen, welche über auf den Abstand der Zapfenfläche voneinander abgestimmte Einführkanäle randoffen sind. Zum Verbinden des Wischblatts mit dem Wischerarm beziehungsweise zum Lösen des Wischblatts vom Wischerarm muss das Wischblatt allerdings in eine Position quer zur Wischerarmerstreckung um die Gelenkzapfenachse gedreht werden, damit die Zapfen durch die Einführkanäle in ihre Lagerausnehmungen gebracht werden können und das montierte Wischblatt in seiner Betriebslage an der Scheibe am Wischerarm unverlierbar gehalten ist. Dazu ist es aber nötig, den Wischerarm von der Scheibe wegzuklappen. Bei vielen Anwendungsfällen ist jedoch eine solche Klappbewegung des Wischerarms nicht möglich, weil beispielsweise der Wischerarm in seiner den Montagevorgang ermöglichenden Ablageposition am Scheibenrand unter einer Abdeckung der Fahrzeugkarrosserie liegt oder weil aus Kostengründen auf die Anordnung des Klappgelenks verzichtet werden soll.

### Vorteile der Erfindung

Bei der erfindungsgemäßen Verbindungsvorrichtung mit den kennzeichnenden Merkmalen des Anspruchs 1 muss der die wischblattseitigen Anschlussmittel aufweisende Adapter zunächst mit dem Wischblatt verbunden werden, so dass er zum Wischblatt gehört. Die Ausbildung eines besonderen Gelenks zwischen Wischerarm und Wischblatt entfällt somit und die Funktionen Gelenkverbindung und Anschlußmittel werden voneinander getrennt und somit kompromißlos optimierbar. Zur Ausgestaltung der Halteverbindung zwischen dem Wischblatt und dem Wischerarm müssen lediglich noch am Adapter angeordnete Halte- und/oder Rastmittel mit den diesen zugeordneten Gegenhalte- oder Gegenrastmitteln des Wischerarms in Eingriff gebracht werden. Deren Ausbildung kann beispielsweise so erfolgen, dass die Verbindung zwischen Wischerarm und Wischblatt durch eine Schiebebewegung des Wischblatts in Längsrichtung des Wischerarms erreicht wird, wobei dazu der Wischerarm nicht oder nur ganz geringfügig von der Scheibe angehoben werden muss.

Eine besonders schmale Bauweise der Gelenkverbindung zwischen Wischerarm und Wischblatt und damit keine von der Verbindungsvorrichtung ausgehende Sichtbehinderung aus dem Fahrgastraum des Kraftfahrzeuges ergibt sich, wenn der Abstand zwischen den beiden Wandflächen des Anschlußelements kleiner ist als die Breite des Tragelements.

Dabei sind gemäß einer besonders fertigungsgerechten Ausgestaltung der Erfindung die beiden Wandflächen des Anschlußelements durch die Außenflächen am T-Fuß eines zumindest abschnittsweise im Querschnitt T-förmigen Bauteils gebildet, dessen T-Kopf dem Tragelement zugewandt, mit diesem verbunden ist.

Eine solche Verbindung kann beispielsweise kostengünstig dadurch erreicht werden, dass das Anschlußelement an den voneinander abgewandten Längskanten des T-Kopfes mit krallenartigen Fortsätzen versehen ist, welche die äußeren Längskanten des Tragelements umgreifen.

Weitere fertigungstechnische Vorteile ergeben sich dadurch, dass das Anschlußelement im Querschnitt gesehen zwei im wesentlichen rechtwinklige Hälften hat, die mit dem einen Winkelschenkel aneinander anliegend den T-Fuß und deren anderen Winkelschenkel zusammen den T-Kopf bilden.

Dabei ist es zweckmäßig, wenn die beiden aus einem Metall bestehenden Hälften am T-Fuß einstückig miteinander verbunden sind.

Bei speziellen Anwendungsfällen kann es jedoch aus Kostengründen besonders vorteilhaft sein, wenn das Anschlußelement aus einem Kunststoff hergestellt ist, weil dann auch die Gelenkzapfen direkt an das Anschlußelement angeformt werden können.

Wenn in weiterer Ausgestaltung der Erfindung der Adapter einen im wesentlichen U-förmigen Querschnitt hat, dessen beiden U-Schenkel den T-Fuß des Anschlußelements seitlich passend übergreifen, dessen U-Basis den T-Fuß des Anschlußelements überdeckt und in jedem der beiden U-Schenkel eine zu dessen freien Enden hin randoffene, schlitzartige Aussparung angeordnet ist, deren Schlitzenden Lageraufnahmen für die Gelenkzapfen bilden, ergeben sich große Führungsflächen zwischen dem zum Wischblatt gehörenden Adapter und dem mit dem Tragelement des Wischblatts verbundenen Anschlußelement, so dass eine spielfreie, ein gutes Wischbild sicherstellende Verbindung erreicht wird.

Eine Sicherung des Adapters an den Gelenkbolzen des Anschlußelements, auch wenn der Wischerarm von der Scheibe abgehoben wird, ergibt sich dadurch, dass der Adapter aus einem elastischen Kunststoff hergestellt ist und dass die schlitzartigen Aussparungen über die Lageraufnahme begrenzende, elastisch aufweitbare Engstellen verfügen.

Zur Verbesserung der Gelenklagerführung ist der Adapter an den voneinander abgewandten Außenseiten seiner U-Schenkel mit die Lageraufnahmen umgebenden kragenartigen Ansätzen versehen.

Mit Blickrichtung auf eine besonders schmale, spielfreie Gelenkverbindung übergreift der Wischblatthalter des Wischerarms den Adapter an dessen U-Schenkeln mit Seitenwangen passend, wobei in den Seitenwangen des Wischblatthalters randoffene Ausnehmungen für die kragenartigen Ansätze des Adapters angeordnet sind.

Damit sich das Wischblatt nicht unbeabsichtigt vom Wischerarm beziehungsweise vom Wischerarmhalter lösen kann, weisen die Ausnehmungen eine L-förmige Gestalt auf, wobei der eine L-Schenkel zum Tragelement des Wischblatts hin randoffenen ist und sich der andere L-Schenkel zum freien Ende des Wischerarms hin erstreckt, wobei die Breite der Ausnehmungen auf den Außendurchmesser der kragenartigen Ansätze des Adapters abgestimmt sind.

Zu einer endgültigen betriebssicheren Verriegelung des Wischblatts am Wischerarm ist der Adapter mit einer gegen eine Rückstellkraft elastisch auslenkbaren Zunge versehen, an der eine Rastschulter ausgebildet ist, welche quer zum Wischblatt und in einer auf dem Tragelement stehenden Ebene ausgerichtet ist, wobei der Rastschulter eine wischerarmfeste Gegenrastschulter zugeordnet ist und wobei die Rastschulter mit der Gegenrastschulter zusammenwirkt, wenn die kragenartigen Ansätze des Adapters an den geschlossenen Enden der anderen L-Schenkel der Ausnehmungen in den Seitenwangen des Wischblatthalters anliegen.

Eine unbeabsichtigte Betätigung der Zunge im Sinne einer Lösung der Sicherungsverbindung zwischen Wischblatt und Wischerarm wird vermieden, wenn die Zunge mit zumindest einem U-Schenkel des Adapters an dessen der Antriebsseite des Wischerarms zugewandten Seite verbunden ist und wenn weiter an der von dem Wischblatt abgewandten Seite der Zunge die Rastschulter vorspringt, welcher die wischerarmfeste Gegenrastschulter zugeordnet ist.

Dagegen ergibt sich eine bedienerfreundliche Ausführungsform der Erfindung wenn die Zunge an der U-Basis des Adapters angeordnet ist und sich zum freien Ende des Wischerarms erstreckt, wobei die Gegenrastschulter an der Stirnseite des Wischerarms ausgebildet ist und die Zunge mit ihrer Rastschulter über das freie Ende des Wischerarms hinausragt.

Um eine nachteilige relative Kippbewegung um die Gelenkachse zwischen dem Wischerarm um dem Adapter zu verhindern hat es sich als zweckmäßig erwiesen, wenn der Adapter mit Abstand von den kragenartigen Ansätzen wenigstens an seinem einen U-Schenkel mit einem seitlichen Vorsprung versehen ist, dem eine an den Seitenwangen des Wischblatthalters vorgesehen Aussparung zugeordnet ist.

Zum Schutz der Gelenkverbindung gegen Verschmutzung ist an den kragenartigen Ansätzen mit Abstand von den U-Schenkeln des Adapters schildartige, seitlich über die Ansätze ragende Abdeckungen angeordnet.

Aus den vorstehenden Ausführungen ergibt sich somit eine ganze Reihe von Merkmalen, die zum Aufbau einer leicht bedienbaren, kostengünstigen und spielfreien Gelenkverbindung zwischen Wischerarm und Wischblatt beitragen. Ein bekanntes Anschlußelement dieser Art (DE 19 72 98 64.8A1) weist an nur einer Seite des T-Fußes einen Gelenkbolzen zum Anschließen an den Wischerarm auf. Es ergibt sich somit eine außerhalb der Längsmittelachse des Wischblatts plazierte Gelenkverbindung, die sich hinsichtlich des vom Wischerarm ausgehenden Anpressdrucks bei bestimmten Scheibenkonfigurationen als nachteilig erweisen kann. Auch dienen dort die beiden voneinander abgewandten Wandflächen des T-Fußes nicht als Führungsflächen, die mit entsprechenden Gegenflächen des Wischerarms während des Wischbetriebs zusammenwirken. Die Wischblattführung wird dort alleine von dem kleinflächigen, einseitigen Ringbund des Gelenkbolzens übernommen. Wenn das Bauelement jedoch gemäß den kennzeichnenden Merkmalen des Anspruchs 20 weitergebildet ist, wird der vom Wischerarm ausgehende Anpressdruck gleichmäßig auf beide Zapfen übertragen und darüber hinaus eine ausgezeichnete Wischblattführung während des Wischbetriebs erreicht.

Weitere vorteilhafte Weiterbildung und Ausgestaltungen der Erfindung sind in der nachfolgenden Beschreibung von in der dazugehörigen Zeichnung dargestellten Ausführungsbeispielen angegeben.

### Zeichnung

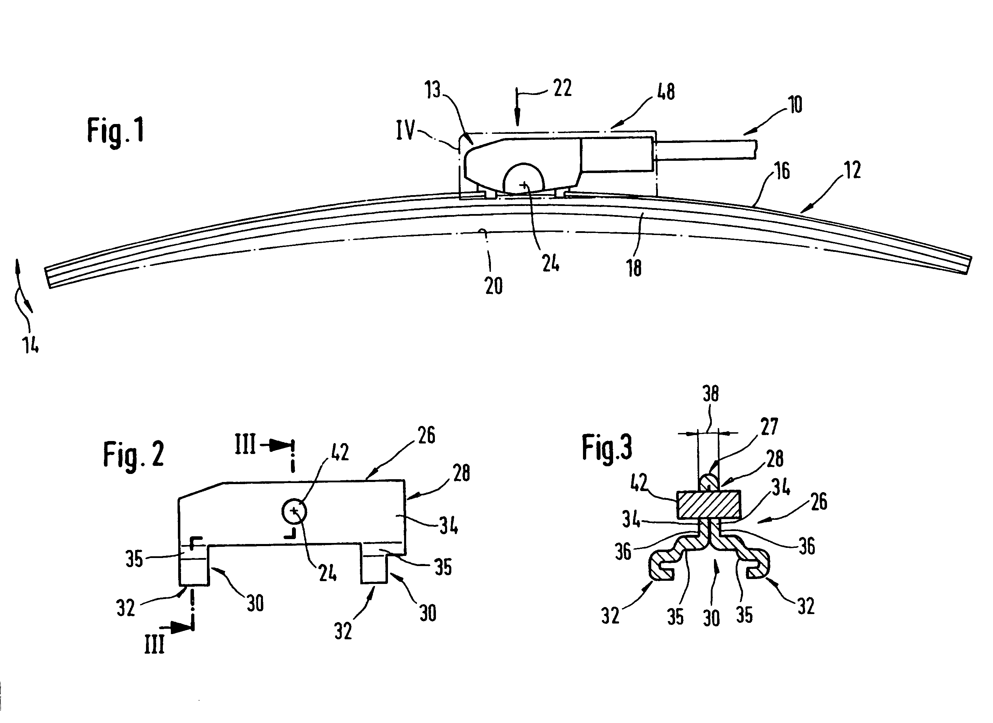

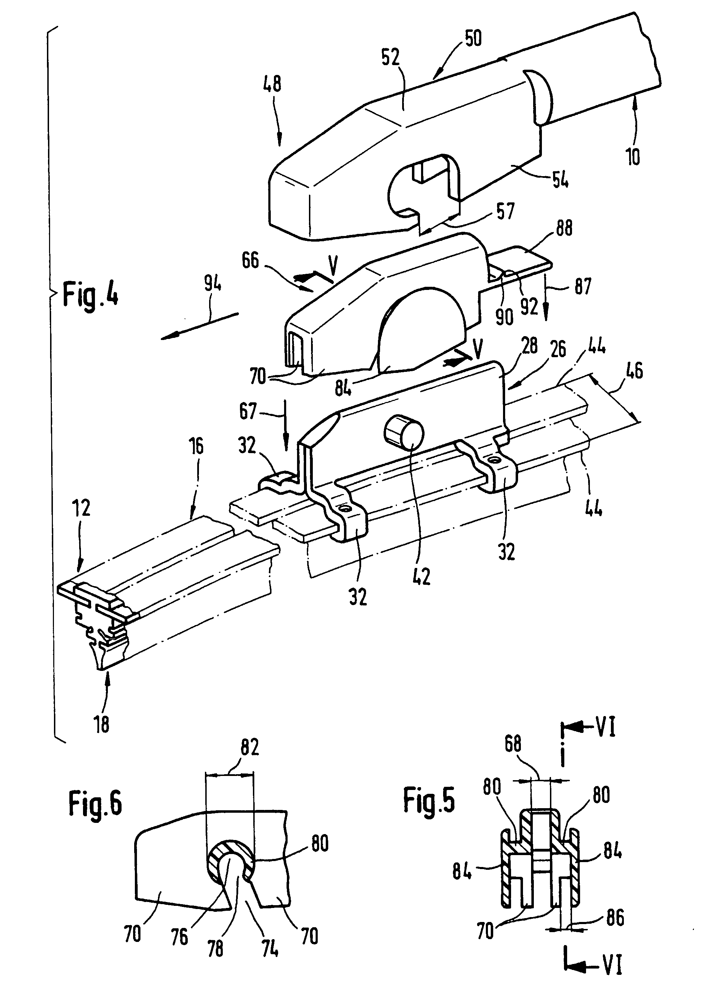

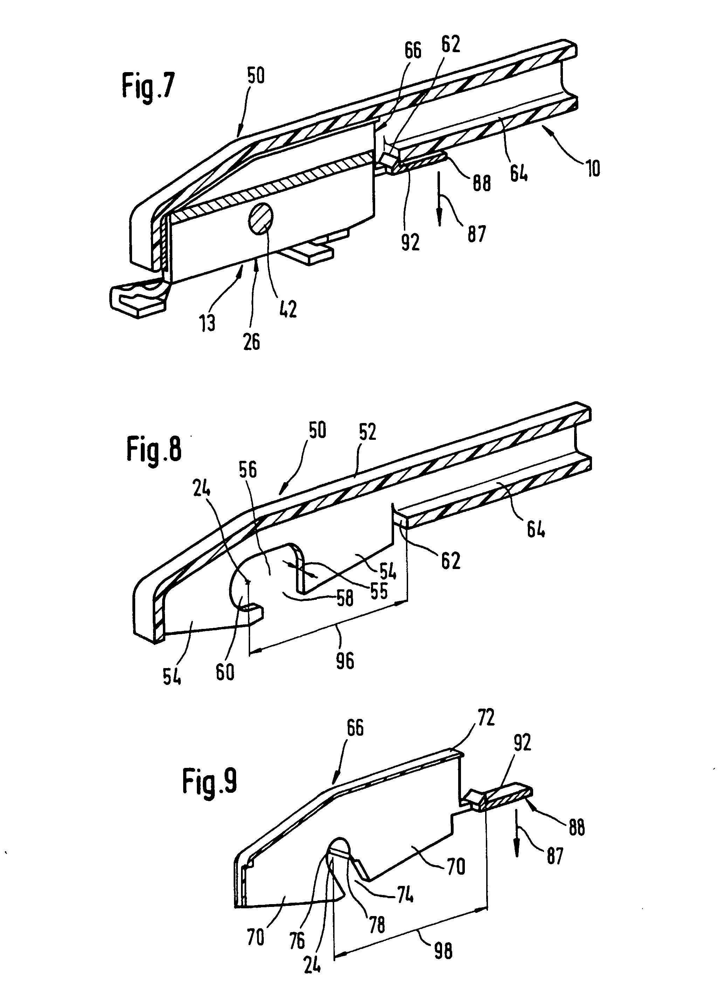

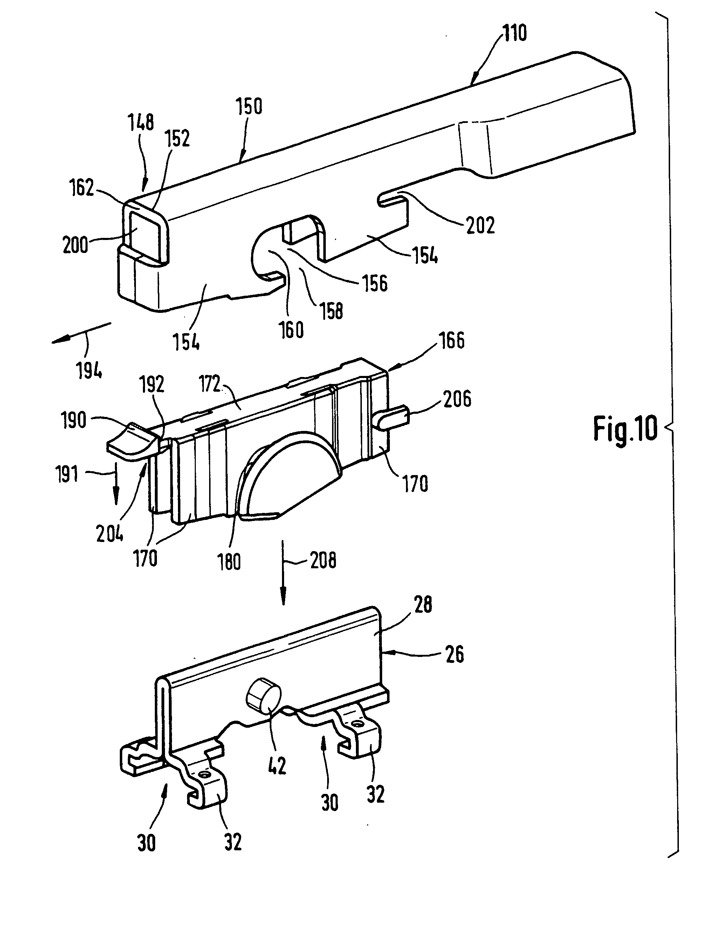

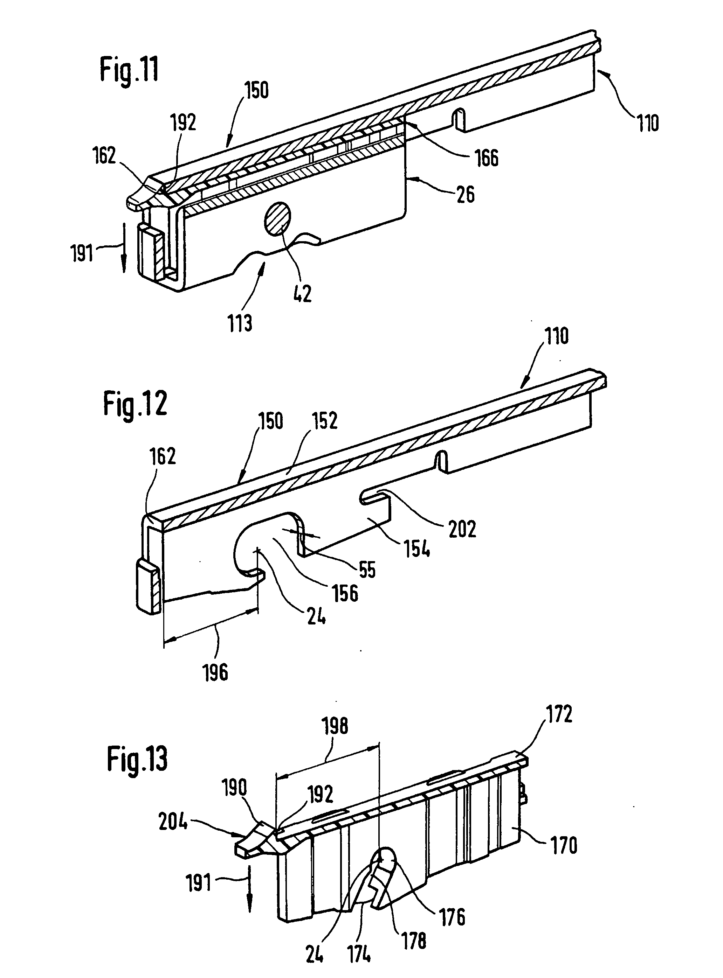

In der Zeichnung zeigen: Figur 1 eine Seitenansicht eines am freien Ende eines Wischerarms angelenkten Wischblatts, Figur 2 eine Seitenansicht eines mit dem Wischerarm fest verbindbaren Anschlusselements, Figur 3 einen Schnitt entlang der Linie 111-111 durch das Anschlusselement gemäß Figur 2, Figur 4 eine Explosionsdarstellung der zu einer ersten Ausführungsform der Verbindungsvorrichtung gehörenden Einzelelemente, Figur 5 einen Querschnitt entlang der Linie V-V in Figur 4 durch das eine, als Adapter dienende Einzelelement, Figur 6 einen Schnitt entlang der Linie VI-VI durch die Anordnung gemäß Figur 5, Figur 7 einen Längsschnitt durch die zur Gelenkverbindung zusammengefügten Bauelemente gemäß Figur 4, Figur 8 ein anderes, als Wischblatthalter dienendes Bauelement gemäß Figur 4 im Längsschnitt, Figur 9 einen Längsschnitt durch das als Adapter dienende Bauelement gemäß Figur 4, Figur 10 eine andere Ausführungsform einer erfindungsgemäßen Gelenkverbindung in einer Anordnung gemäß Figur 4, Figur 11 einen Längsschnitt gemäß Figur 7 durch die Anordnung gemäß Figur 10, Figur 12 einen Längsschnitt gemäß Figur 8 durch den Wischblatthalter gemäß Figur 11 und Figur 13 einen Längsschnitt gemäß Figur 9 durch den Adapter gemäß Figur 10.

### Beschreibung der Ausführungsbeispiele

Figur 1 zeigt eine Seitenansicht des freien Endes eines von seinem anderen, nicht dargestellten Ende aus angetriebenen Wischerarms 10, an dem ein Wischblatt 12 über eine Gelenkverbindung 13 so angelenkt ist, dass es in Richtung des Doppelpfeils 14 schwingen kann. Das Wischblatt hat ein bandartig langgestrecktes, über seine Bandflächen gekrümmtes, federelastisches Tragelement 16, an dessen der Scheibe 20 zugewandten unteren konkaven Bandfläche 17 eine ebenfalls bandartig langgestreckte, gummielastische Wischleiste 18 längsachsenparellel angeordnet ist. Die zu wischende Oberfläche der Kraftfahrzeugscheibe ist in Figur 1 durch eine strichpunktierte Linie 20 angedeutet. Da die Linie 20 die stärkste Krümmung der Scheibenoberfläche darstellen soll ist klar ersichtlich, dass die Krümmung des mit seinen beiden Enden an der Scheibe 20 anliegenden, noch unbelasteten Wischblatts 12 stärker ist als die maximale Scheibenkrümmung. Unter einem über dem Wischerarm 10 in Richtung des Pfeiles 22 wirkenden Anpressdruck legt sich das Wischblatt mit seiner Wischleiste 18 über seine gesamte Länge an der Scheibenoberfläche 20 an. Dabei baut sich in aus Metall gefertigten Tragelement 16 eine Spannung auf, welche für eine ordnungsgemäße Anlage der Wischleiste 18 über deren gesamte Länge an der Scheibe sowie für eine gleichmäßige Verteilung des Anpressdrucks (Pfeil 22) sorgt.

Weil die in aller Regel sphärisch gekrümmte Scheibe nicht einen Abschnitt einer Kugeloberfläche darstellt, muss sich das Wischblatt 12 gegenüber dem Wischerarm 10 während seiner Wischbewegung ständig der jeweiligen Lage und dem Verlauf der Scheibenoberfläche anpassen können. Deshalb ist die eine Schwingbewegung (Doppelpfeil 14) um die Gelenkachse 24 ermöglichende leichtgängige Gelenkverbindung zwischen Wischerarm und Wischblatt notwendig. Die Anordnung der Gelenk- oder Schwingachse ist dabei so getroffen, dass sie quer zur Längserstreckung des Wischerarms 10 und quer zur Richtung (Pfeil 22) des Anpreßdrucks ausgerichtet ist. Zwei Ausführungsbeispiele einer solchen Gelenkverbindung sollen im Folgenden anhand der Figuren 4 bis 9 und 10 bis 13 näher erläutert werden.

Zum Wischblatt gehört noch ein Anschlußelement 26 (Figuren 2 und 3), das einen im wesentlichen T-förmigen Querschnitt hat. Es hat somit einen T-Fuß 28 und einen T-Kopf 30, dessen Längserstreckung sich jedoch auf zwei vergleichsweise kurze, mit Abstand voneinander liegende Abschnitte beschränkt. An den von einander abgewandten Längskanten des T-Kopfes 30 sind krallenartige Fortsätze 32 angeordnet, auf deren Funktion später noch eingegangen wird. Wie insbesondere aus Figur 3 ersichtlich ist, ergibt sich beim Ausführungsbeispiel die T-Form des Anschlußelements 26 dadurch, dass ein Blechteil so gefaltet worden ist, dass der T-Fuß 28 durch zwei aneinander angelegte Blechabschnitte 34 gebildet ist, die in ihrem weiteren Verlauf abgewinkelt in die T-Kopfteile 32 übergehen. Es ergeben sich somit zwei symmetrisch zueinander angeordnete Hälften, welche durch die Faltung am T-Fuß 28 einstückig miteinander verbunden sind. Diese beiden aneinander anliegenden, im wesentlichen rechtwinkligen Hälften des Anschlußelements 26 bilden somit mit ihrem einen Winkelschenkel 34 den T-Fuß 28 und die anderen Winkelschenkel 35 ergeben zusammen den T-Kopf 30. Die beiden voneinander abgewandten Außenflächen 36 des T-Fußes 28 liegen mit einem Abstand 38 voneinander der kleiner ist als die Breite 46 (Figur 4) des Tragelements 16. Der T-Fuß 28 des Anschlußelements 26 ist in seinem Längs-Mittelabschnitt in einer Bohrung 27 von einem Gelenkbolzen 42 durchdrungen, der fest mit dem Anschlußelement verbunden ist und dessen beiden Enden beidseitig aus dem T-Fuß 28 ragen (Figur 3). Es ist aber auch denkbar, den Gelenkbolzen beziehungsweise dessen beiden aus den Wänden oder Außenflächen 36 des Winkelschenkel 34 herausragenden Enden oder Gelenkzapfen 43 durch zwei separate, kurze Zapfen zu ersetzen, die ihrerseits beispielsweise durch mannigfache, dem Fachmann bekannte Verfahren - z.B. die Anordnung von Durchzügen, Prägemarken oder Fließpreßwarzen etc. - gebildet sein können.

Eine erste Ausführungsform der erfindungsgemäßen Gelenkverbindung zwischen Wischerarm 10 und Wischblatt 12 ist in Figur 4 in einer Explosionsdarstellung dargestellt. Die Darstellung beschränkt sich dabei auf die zum Verständnis der Gelenkverbindung 13 notwendigen Bereiche des Wischblatts 12. Dort ist auch ersichtlich, wie das Anschlußelement 26 mit dem Tragelement 16 des Wischblatts 12 verbunden ist. Das Wischblatt hat als Tragelement zwei zueinander parallel angeordnete in Längsnuten der Wischleiste 18 positionierte, in Längsrichtung über ihre Bandflächen gekrümmte Federschienen 44, welche zumindest im Längs-Mittelabschnitt mit äußeren Randstreifen aus den Längsnuten ragen. Das dort plazierte Anschlußelement 26 umfasst von der äußeren konvexen Bandfläche 15 des Tragelements 16 aus mit seinen krallenartigen Fortsätzen 32 die voneinander abgewandten, aus den Längsnuten ragenden äußeren Randstreifen 45 der Federschienen 44, wobei eine von den Krallen 32 ausgehende Klemmkraft und/oder Schweißstellen für eine unlösbare Verbindung zwischen den Federschienen 44 und dem Anschlußelement 26 sorgt. Weitere Befestigungsverfahren sind dem Fachmann geläufig. Dieses Anschlußelement 26 ist somit Teil des Wischblatts 12. Bei Betrachtung des Wischblatts 12 in Figur 4 ist auch klar, dass der Abstand 38 zwischen den beiden äußeren Wandflächen 36 (Figur 3) kleiner ist als die Breite 46 des Tragelements 16.

An seinem von seiner Antriebsseite abgewandten, freien Ende 48 (Figur 1) ist der Wischerarm 10 mit einem Wischblatthalter 50 versehen. Aus dem in Figur 8 dargestellten Längsschnitt durch den Wischblatthalter und unter gleichzeitiger Betrachtung des Wischblatthalters gemäß Figur 4 geht hervor, dass dieser einen U-förmigen Querschnitt hat. Er hat somit in diesem Bereich eine U-Basis 52, und zwei mit Abstand und parallel zueinander angeordnete U-Schenkel oder Wangen 54, in denen jeweils eine Ausnehmung 56 angeordnet ist, welche eine L-förmige Gestalt hat. Der eine L-Schenkel 58 der Ausnehmung 56 ist zum Tragelement 16 (Figur 4) hin randoffen, während sich der andere L-Schenkel 60 zum freien Ende des Wischerarms 10 beziehungsweise des Wischblatthalters 50 hin erstreckt. Auf der vom freien Ende des Wischblatthalters 50 abgewandten Seite der Ausnehmung 56 erstreckt sich mit Abstand von dieser eine Anschlagschulter 62 in den zwischen den Wangen 54 verbleibenden Raum des Wischblatthalters 50 (Figur 8). Die Anschlagschulter 62 ist am Ende einer nach innen gerichteten, abgewinkelten Fortführung 64 des U-Schenkels 54 ausgebildet und weist zum freien Ende des Wischblatts. In Verbindung mit Figur 4 ist klar ersichtlich, dass in Figur 8 eine Längshälfte des Wischblatthalters 50 dargestellt ist. Da die Längsschnitt-Ebene eine Symmetrieebene darstellt, ist weiter klar, dass die nicht dargestellte andere Längshälfte des Wischblatthalters 50 spiegelbildlich zu Figur 8 ausgebildet ist.
Aus den Figuren 4 bis 6 und 9 ist der Aufbau eines Adapters 66 ersichtlich, durch welchen die gelenkige Verbindung des Wischblatts 12 mit seinem Anschlußelement 26 am Wischblatthalter 50 des Wischerarms 10 ermöglicht wird. Bei Betrachtung der Figur 9 gilt es zu berücksichtigen, dass der Längsschnitt ebenfalls in einer Symmetrieebene liegt, so dass die fehlende, aber aus den Figuren 4 und 5 ersichtliche andere Längshälfte eine der Figur 9 entsprechende, spiegelbildliche Ausbildung hat. Weiter zeigen die erwähnten Figuren einen U-förmigen Aufbau des Adapters 66. Der Abstand 68 (Figur 5) zwischen seinen beiden U-Schenkeln 70 ist so gewählt, dass sich eine leichtgängige, spielfreie Führung des Adapters auf den T-Fuß 28 des Anschlußelements 26 ergibt, wenn dieser in seiner Arbeitsposition gebracht wird. In diese Arbeitsposition überdeckt die U-Basis 72 den T-Fuß 28 des Anschlußelements 26. In jedem der beiden U-Schenkel 70 des Adapters 66 sind miteinander deckungsgleiche, zu den freien Enden der U-Schenkel hin randoffene, schlitzartige Aussparungen 74 angeordnet wobei an den Schlitzenden Lageraufnahmen 76 für die Gelenkbolzen 42 des Anschlußelements 26 ausgebildet sind. Um eine betriebssichere Halterung des Adapters 66 auf den Gelenkbolzen 42 sicherzustellen, weisen die schlitzartigen Aussparungen 74 im Bereich der Lageraufnahmen 76 elastisch aufweitbare Engstellen 78 auf. Die schlitzartigen Aussparungen 74 bilden Einführkanäle, über welche die zapfenartigen Gelenkbolzen 42 in ihre Lageraufnahmen 76 eingebracht werden können. Die Aufweitbarkeit der Engstellen 78 wird beim Ausführungsbeispiel dadurch erreicht, dass der Adapter 66 aus einem elastischen Kunststoff hergestellt ist. Wie insbesondere die Figuren 5 und 6 zeigen, sind an den voneinander abgewandten Außenseiten der U-Schenkel 70 des Adapters 66 kragenartige Ansätze 80 angeordnet, welche die Lageraufnahmen über mindestens 180° ringartig umgeben (Figur 6). Der Durchmesser 82 der kragenartigen Ansätze 80 ist auf die Breite 57 der Ausnehmung 56 abgestimmt. An den freien Enden der kragenartigen Ansätze 80 sind - wie insbesondere aus den Figuren 4 und 5 ersichtlich - schildartige, seitlich über die Ansätze 80 ragende Abdeckungen 84 angeordnet. Der Abstand 86 zwischen den Außenseiten der U-Schenkel 70 und den diesen zugekehrten Innenwänden der Abdeckungen 84 ist auf die Dicke 55 (Figur 8) der Wangen 54 des Wischblatthalters 50 abgestimmt. An seiner dem antriebsseitigen Ende des Wischerarms 10 zugewandten Ende ist der Adapter 66 mit einer einstückig mit diesem verbundenen, gegen eine Rückstellkraft elastisch auslenkbaren, blattartigen Zunge 88 versehen, deren Blattflächen etwa parallel zur Ebene des Tragelements 16 liegen. An der der U-Basis 72 des Adapters 66 zugewandten Blattfläche weist die Zunge 88 einen zahnartigen Vorsprung 90 auf, an dessen vom Adapterkörper abgewandten Seite eine Rastschulter 92 ausgebildet ist. Die Rastschulter 92 erstreckt sich quer.zum Wischblatt 10 und in einer auf dem Tragelement 16 stehenden Ebene.

Zur Vorbereitung der Verbindung des Wischblatts 12 mit dem Wischerarm 10 wird zunächst der Adapter 66 auf das Bauelement 26 aufgebracht. Dazu wird der Adapter 66 in Richtung des Pfeiles 67 auf den T-Fuß 28 des Bauelements 26 aufgesteckt, wobei die zapfenartigen Gelenkbolzen 42 über die schlitzartigen Aussparungen 74 (Figur 6) nach Passieren der Engstelle 78 in ihrer Lageraufnahmen 76 gelangen. In dieser Montagestellung kann der Adapter 66 um das zur Sicherstellung der Wischblatt-Wischarbeit notwendige Winkelmaß um die durch die Gelenkbolzen 42 gebildete Gelenkachse 24 in Richtung des Doppelpfeils 14 (Figur 1) schwingen. Der Adapter 66 bildet nun ein Teil des Wischblatts 12. Zum Anschließen an den Wischerarm 10 wird das Wischblatt samt seinem Adapter 66 entgegen dem Pfeil 67 (Figur 4) zum Wischblatthalter 50 hin bewegt derart, dass der Adapter 66 zwischen die U-Schenkel oder Wangen 54 des Wischblatthalters 50 gelangt. Dabei treten die kragenartigen Ansätze 80 in die Ausnehmung 56 des Wischblatthalters 50 ein, wobei die Wangen 54 zwischen die U-Schenkel 70 des Adapters 66 und die schildartigen Abdeckungen 84 der Ansätze 80 eintauchen. Wenn diese dem Pfeil 67 entgegen gerichtete Montagebewegung durch die L-förmige Gestalt der Ausnehmung 76 begrenzt ist, wird das Wischblatt in Richtung des Pfeils 94 (Figur 4) zum freien Ende 48 des Wischblatthalters 50 gezogen, bis die kragenförmigen Ansätze 80 an dem geschlossenen Ende des anderen L-Schenkels 60 der Ausnehmung 56 anliegen. In dieser nun erreichten End- oder Arbeitsposition des Wischblatts 12 am Wischerarm 10 federt die während des Montagevorgangs in Richtung des Pfeils 87 durch die Fortführung 64 zum Tragelement 16 des Wischblatts 12 hin ausgelenkte Zunge 88 in ihre Ausgangsposition zurück, wobei die am Vorsprung 90 ausgebildete Rastschulter 92 mit der Anschlagschulter 62 an der Fortführung 64 zusammenwirkt. Die Zunge 88 liegt dabei geschützt unterhalb des Wischerarms 10. Um eine ordnungsgemäße spielfreie Arbeitsposition des Wischblatts 12 am Wischerarm 10 zu gewährleisten ist eine sorgfältige Abstimmung des Abstandes 96 zwischen der Gelenkachse 24 und der Anschlagschulter 62 an der Fortführung 64 des Wischerarms auf den Abstand 98 zwischen der Gelenkachse 24 und der Rastschulter 92 des Adapters 66 erforderlich. Wenn das Wischblatt vom Wischerarm gelöst werden soll, muss lediglich die Zunge 88 in Richtung des Pfeiles 87 soweit ausgelenkt werden, dass die Rastschulter 92 die Anschlagschulter 62 freigibt. Danach ist das Wischblatt zunächst entgegen der Richtung des Pfeiles 94 verschiebbar und danach in Richtung des Pfeiles 67 vom Wischerarm 10 abzunehmen.

Bei der anderen, in den Figuren 10 bis 13 dargestellten Ausführungsform der Erfindung entspricht sowohl der Aufbau des Wischerarms 110 beziehungsweise dessen Wischblatthalters und der Aufbau des Adapters 166 im wesentlichen dem Aufbau des Wischblatthalters.50 beziehungsweise des Adapters 66 der oben beschriebenen ersten Ausführungsform. Deshalb werden alle dort schon beschriebenen und unverändert übernommenen Ausgestaltungen mit einer Bezugszahl bezeichnet, die um 100 größer ist als die Bezugszahlen der ersten Ausführungsform. Auch beschränkt sich die Beschreibung des zweiten Ausführungsbeispiels der Erfindung im wesentlichen auf die Details, bei welcher die zweite Ausführungsform von der schon beschriebenen ersten Ausführungsform abweicht.

So hat der Wischerarm 110 an der an seinem freien Ende vorhandenen Querwand 111 einen Durchbruch 200 (Figur 10), wodurch die U-Basis 152 und Teilbereiche der U-Schenkel oder Wangen 154 mit einer Stirnfläche 162 enden und die Stirnfläche 162 der U-Basis eine wischerarmseitige Anschlagschulter bildet. Diese Anschlagschulter 162 tritt an die Stelle der Anschlagschulter 62 gemäß der ersten Ausführungsform. Weiter sind in den U-Schenkeln 154 des Wischblatthalters 150 Ausnehmungen 156 angeordnet, welche ebenfalls eine L-förmige.Konfiguration haben und damit jeweils zwei L-Schenkel 158 und 160 aufweisen. An der von der Stirnfläche 162 abgewandten Seite hat der Wischblatthalter 150 in seinen U-Schenkeln 154 jeweils einen randoffenen Schlitz 202, der sich in Längsrichtung des Wischerarms und somit auch in Richtung des anderen L-Schenkels 160 erstreckt. Die Öffnung der Schlitze 202 ist von der Stirnfläche 162 abgewandt. Anstelle der Zunge 88 bei der ersten Ausführungsform, ist beim Adapter 160 eine federelastisch gegen eine Rückstellkraft auslenkbare Zunge 204 an dem Ende des Adapters 166 angeordnet, welches nach erfolgter Montage des Wischblatts 12 am Wischerarm im Bereich des freien Ende des Wischerarms 110 liegt. Sie ist als Verlängerung an der U-Basis 172 des aus einem elastischen Kunststoff gefertigten Adapters 166 angeordnet. An ihrer der U-Basis 172 zugewandten oberen Zungenfläche befindet sich ein zahnartiger Vorsprung 190 der sich quer zur Längserstreckung des Wischerarms 110 erstreckt und an dem eine in einer auf dem Tragelement stehenden Ebene ausgerichtete Rastschulter 192 ausgebildet ist, welche vom freien Ende 148 des Wischerarms 110 weg weist. Weiter ist der Adapter an seinen beiden U-Schenkeln 170 mit leistenartigen Vorsprüngen 206 versehen, welche den Schlitzen 202 in den U-Schenkeln 154 zugeordnet und an den voneinander abgewandten Außenflächen der U-Schenkel 170 angeordnet sind.

Zur Montage des Wischblatts am Wischerarm wird wie folgt vorgegangen. Zunächst wird in der schon beschriebenen Weise der Adapter 166 in Richtung des Pfeiles 208 auf das Anschlußelement 26 aufgebracht, welches dem schon beschriebenen Anschlußelement entspricht. Dabei gelangt der T-Fuß 28 des Bauelements 26 zwischen die U-Schenkel 170 des Adapters 166 und die zapfenartigen Gelenkbolzen 42 treten in die schlitzartigen Aussparungen 174 in den U-Schenkeln 170 ein (Figur 13), bis sie über die Engstellen 178 in ihre Lageraufnahmen 176 gelangen. In dieser Position ist nun der Adapter 166 durch die Wirkung der elastisch aufweitbaren Engstellen 178 unverlierbar am Wischblatt 12 gehalten, von dem in Figur 10 jedoch lediglich das Anschlußelement 26 dargestellt ist. Dabei ist die Abstimmung, genauso wie bei der schon beschriebenen Ausführungsform zwischen dem Adapter 166 und dem Anschlußelement 26 so getroffen, dass der Adapter gegenüber dem Anschlußelement 26 um die durch die Gelenkbolzen 42 gebildete Gelenkachse 24 in Richtung des Doppelpfeils 14 in Figur 1 pendeln kann. Der Adapter 166 gehört jetzt zum Wischblatt, das nun ohne Schwierigkeiten mit dem Wischerarm 110 beziehungsweise mit dessen Wischblatthalter 150 lösbar verbunden werden kann. Dazu wird das Wischblatt in der schon beschriebenen Weise so mit dem Wischblatthalter 150 zusammengefügt, dass die kragenartigen Ansätze 180 in die L-förmige Ausnehmung 156 gelangen. Wenn mit diesem Montageschritt die schon beschriebene Zwischenposition erreicht ist, wird das Wischblatt in Richtung des Pfeiles 194 (Figur 10) gezogen, bis die kragenartigen Ansätze 180 an der Endkante des anderen L-Schenkels 160 anschlagen. In dieser Position tritt die während des Einbringens des Adapters 166 in dem Wischblatthalter 150 in Richtung des Pfeiles 191 durch die U-Basis 152 in Richtung des Pfeiles 108 elastisch ausgelenkte Zunge aus dem Durchbruch 200 des Wischblatthalters 150 heraus und federt entgegen der Pfeilrichtung 191 in ihre Ausgangsposition zurück, wobei die Rastschulter 192 des Vorsprungs 190 mit der Stirnfläche 162 des Wischerarmhalters 150 spiellos zusammenarbeitet. Auch bei dieser Ausführungsform ist es wichtig, dass der Abstand 196 von der Gelenkachse 24 bis zur Stirnfläche 162 des Wischblatthalters 150 exakt auf den Abstand 198 von der Gelenkachse 24 zur Rastschulter 192 des Vorsprungs 190 des Adapters 166 abgestimmt ist. Während der Montagebewegung in Richtung des Pfeiles 194 treten dann auch gleichzeitig die leistenartigen Vorsprünge 206 des Adapters 166 in die ihnen zugeordneten schlitzartigen Aussparungen 202 in den Schenkeln 154 des Wischblatthalters 150 ein und sichern somit den Adapter 166 gegen eine unerwünschte Pendelbewegung im Wischblatthalter 150 um die Gelenkachse 24. Die Demontage des Wischblatts vom Wischerarm erfolgt in der schon angegebenen Weise, nachdem die Zunge 204 soweit in Richtung des Pfeiles 191 (Figur 11) ausgelenkt worden ist, dass die als Anschlagschulter dienende Stirnfläche 162 des Wischblatthalters 150 freigegeben worden ist.

Beiden Ausführungsbeispielen ist gemeinsam, dass an den beiden zapfenartigen Gelenkbolzen 42 ein um deren Längsachsen 24 pendelbare Adapter 66 beziehungsweise 166 gelagert ist, welcher Mittel zum Anschließen an den Wischblatthalter 50 beziehungsweise 150 des Wischerarms 10 aufweist. Die notwendige Pendelbewegung zwischen Wischerarm und Wischblatt erfolgt also zwischen dem mit dem Wischerarm verrasteten Adapter 26 und dem Anschlußelement 66.

## Patentansprüche

1. Vorrichtung zum lösbaren Verbinden eines Wischblatts (12) zum Reinigen von Scheiben insbesondere von Kraftfahrzeugen, mit einem angetriebenen, einen Wischblatthalter (50, 150) aufweisenden Wischerarm (10) wobei das mit einer langgestreckten, gummielastischen Wischleiste (18) an der Scheibe (20) anlegbare Wischblatt ein bandartig langgestrecktes, in Längsrichtung über seine Bandflächen (15, 17) gekrümmtes, federelastisches Tragelement (16) aufweist, an dessen unterer, konkaver Bandfläche (17) die Wischleiste (18) längsachsenparallel angeordnet ist und an dessen äußerer konvexer Bandfläche ein Anschlusselement (26) sitzt, das zwei zueinander parallele, sich in Längsrichtung des Wischblatts erstreckende, in einer auf der Bandfläche stehenden Ebene ausgerichtete Wandflächen (36) aufweist und wobei eine eine Schwingbewegung um eine Gelenkachse (24) ermöglichende Gelenkverbindung zwischen dem Wischarm und dem Wischblatt vorgesehen ist, **dadurch gekennzeichnet, dass** über die Gelenkverbindung ein um deren Gelenksachsen pendelbarer Adapter (66, 166) am Anschlusselement (26) gelagert ist, welcher Mittel zum Anschließen an den Wischblatthalter (50, 150) des Wischerarms (10) aufweist.

2. Vorrichtung nach Anspruch 1, **dadurch gekennzeichnet, dass** aus jeder Wandfläche (36) des Anschlusselements (26) ein Gelenkzapfen (42) ragt, deren Längsachsen miteinander fluchten und dass der Adapter (66, 166) an den beiden Gelenkzapfen (42) gelagert ist.

3. Vorrichtung nach einem der Ansprüche 1 oder 2, **dadurch gekennzeichnet, dass** der Abstand (38) zwischen den beiden Wandflächen (34) kleiner ist als die Breite (46) des Tragelements (16).

4. Vorrichtung nach einem der Ansprüche 1 bis 3, **dadurch gekennzeichnet, dass** die beiden Wandflächen (36) durch die Außenflächen am T-Fuß (28) eines zumindest abschnittsweise im Querschnitt T-förmigen Bauteils gebildet sind, dessen T-Kopf (30) dem Tragelement (16) zugewandt mit diesem verbunden ist.

5. Vorrichtung nach Anspruch 4, **dadurch gekennzeichnet, dass** das Anschlusselement (26) an den voneinander abgewandten Längskanten des T-Kopfes (30) mit krallenartigen Fortsätzen (32) versehen ist, welche die äußeren Längskanten des Tragelements (16) umgreifen.

6. Vorrichtung nach einem der Ansprüche 4 oder 5, **dadurch gekennzeichnet, dass** das Anschlusselement (26) im Querschnitt gesehen zwei im wesentlichen rechtwinklige Hälften hat, die mit einem Winkelschenkel aneinander anliegend den T-Fuß und deren anderen Winkelschenkel zusammen den T-Kopf (30) bilden.

7. Vorrichtung nach Anspruch 6, **dadurch gekennzeichnet, dass** die beiden aus einem Metall bestehenden Hälften am T-Fuß (28) einstückig miteinander verbunden sind.

8. Vorrichtung nach Anspruch 4, **dadurch gekennzeichnet, dass** das Anschlusselement (26) aus einem Kunststoff hergestellt ist.

9. Vorrichtung nach einem der Ansprüche 4 bis 8, **dadurch gekennzeichnet, dass** der Adapter (66, 166) einen im wesentlichen U-förmigen Querschnitt hat, dessen U-Schenkel (70, 170) den T-Fuß (28) des Anschlusselements (26) seitlich passend übergreifen, dessen U-Basis (72) den T-Fuß (28) des Anschlusselements (26) überdeckt und in jedem der beiden U-Schenkel (70) eine zu deren freien Enden hin randoffene, schlitzartige Aussparung angeordnet ist, deren Schlitzenden Lageraufnahmen (76, 176) für die Gelenkbolzen (42) bilden.

10. Vorrichtung nach Anspruch 9, **dadurch gekennzeichnet, dass** der Adapter (66, 166) aus einem elastischen Kunststoffhergestellt ist und dass die schlitzartigen Aussparungen (74) über die Lageraufnahme begrenzende elastisch aufweitbare Engstellen (78) verfügen.

11. Vorrichtung nach einem der Ansprüche 9 oder 10, **dadurch gekennzeichnet, dass** der Adapter (66, 166) an den voneinander abgewandten Außenseiten seiner U-Schenkel (70, 170) mit die Lageraufnahmen (76, 176) umgebenden kragenartigen Ansätzen (80) versehen ist.

12. Vorrichtung nach Anspruch 11, **dadurch gekennzeichnet, dass** der Wischblatthalter (50, 150) des Wischerarms (10) den Adapter an dessen U-Schenkeln mit Seitenwangen passend übergreift und dass in den Seitenwangen (54) randoffene Ausnehmungen (56, 156) für die kragenartigen Ansätze (80) des Adapters angeordnet sind.

13. Vorrichtung nach Anspruch 12, **dadurch gekennzeichnet, dass** die Ausnehmungen in den Seitenwangen des Wischblatthalters (50, 150) eine L-förmige Gestalt aufweisen, wobei der eine L-Schenkel zum Tragelement des Wischblatts hin randoffen ist und sich der andere L-Schenkel (60) zum freien Ende des Wischerarms hin erstreckt und dass die Breite (57) der Ausnehmungen (56) auf den Außendurchmesser (82) der kragenartigen Ansätze (80) des Adapters abgestimmt ist.

14. Vorrichtung nach Anspruch 13, **dadurch gekennzeichnet, dass** der Adapter (66, 166) mit einer gegen eine Rückstellkraft elastisch auslenkbaren Zunge (88, 204) versehen ist, an der eine Rastschulter ausgebildet ist, welche quer zum Wischblatt und in einer auf dem Tragelement (16) stehenden Ebene ausgerichtet ist, dass der Rastschulter eine wischerarmfeste Gegenrastschulter zugeordnet ist und die Rastschulter mit der Gegenrastschulter zusammenwirkt, wenn die kragenförmigen Ansätze des Adapters an den geschlossenen Enden der anderen L-Schenkel der Ausnehmungen in den Seitenwangen des Wischblatthalters anliegen.

15. Vorrichtung nach Anspruch 14, **dadurch gekennzeichnet, dass** die Zunge (88) mit zumindest einem U-Schenkel (70) des Adapters (66) an dessen der Antriebsseite des Wischerarms zugewandten Seite verbunden ist, dass an der von dem Wischblatt abgewandten Seite der Zunge die Rastschulter vorspringt, welcher die wischerarmfeste Gegenrastschulter (62) zugeordnet ist.

16. Vorrichtung nach Anspruch 14, **dadurch gekennzeichnet, dass** die Zunge (204) an der U-Basis (72) des Adapters (166) angeordnet ist und sich zum freien Ende des Wischerarms erstreckt, dass die Gegenrastschulter (162) an der Stirnseite des Wischerarms (10) ausgebildet ist und dass die Zunge (204) mit ihrer Rastschulter über das freie Ende des Wischerarms hinaus ragt.

17. Vorrichtung nach einem der Ansprüche 15 oder 16, **dadurch gekennzeichnet, dass** der Adapter mit Abstand von den kragenartigen Ansätzen (80) wenigstens an seinem einen U-Schenkel mit einem seitlichen Vorsprung (206) versehen ist, dem eine an den Seitenwangen des Wischblatthalters vorgesehene Aussparung zugeordnet ist.

18. Vorrichtung nach einem der Ansprüche 11 bis 17, **dadurch gekennzeichnet, dass** an den kragenartigen Ansätzen (80) mit Abstand von den U-Schenkeln des Adapters schildartige, seitlich über die Ansätze ragende Abdeckungen (84) angeordnet sind.

19. Wischblatt (12) zum Reinigen von Scheiben insbesondere von Kraftfahrzeugen mit einer langgestreckten, gummielastischen Wischleiste (18) und einem bandartig langgestreckten, in Längsrichtung über seine Bandflächen (15, 17) gekrümmtes, federelastisches Tragelement (16) an dessen konkaver Bandfläche (17) die Wischleiste (18) längsachsenparellel angeordnet ist und an dessen konvexer Bandfläche ein Anschlusselement (26) sitzt, das zwei zueinander parallele, sich in Längsrichtung des Wischblatts erstreckende, in einer auf der Bandfläche stehenden Ebene ausgerichtete Wandflächen (36) aufweist, wobei aus jeder Wandfläche ein Gelenkzapfen (42) ragt und wobei die Längsachsen der beiden Gelenkzapfen miteinander fluchten, **dadurch gekennzeichnet, dass** an den beiden Gelenkzapfen (42) des Anschlusselements (26) ein um deren Längsachsen pendelbarer Adapter (66, 166) gelagert ist, welcher Mittel zum Anschließen an einen Wischblatthalter (50, 150) eines Wischerarms (10) aufweist.

20. Wischblatt nach Anspruch 19, **dadurch gekennzeichnet, dass** der Abstand (38) zwischen den beiden Wandflächen (34) kleiner ist als die Breite (46) des Tragelements (16).

21. Wischblatt nach einem der Ansprüche 19 oder 20, **dadurch gekennzeichnet, dass** die beiden Wandflächen (36) durch die Außenflächen am T-Fuß (28) eines zumindest abschnittsweise im Querschnitt T-förmigen Bauteils (26) gebildet sind, dessen T-Kopf (30) dem Tragelement (16) zugewandt mit diesem verbunden ist.

22. Wischblatt nach Anspruch 21, **dadurch gekennzeichnet, dass** das Anschlusselement (26) an den voneinander abgewandten Längskanten des T-Kopfes (30) mit krallenartigen Fortsätzen (32) versehen ist, welche die äußeren Längskanten des Tragelements (16) umgreifen.

23. Wischblatt nach einem der Ansprüche 21 oder 22, **dadurch gekennzeichnet, dass** das Anschlusselement (26) im Querschnitt gesehen zwei im wesentlichen rechtwinklige Hälften hat, die mit einem Winkelschenkel aneinander anliegend den T-Fuß und deren anderen Winkelschenkel zusammen den T-Kopf (30) bilden.

24. Wischblatt nach Anspruch 23, **dadurch gekennzeichnet, dass** die beiden aus einem Metall bestehenden Hälften am T-Fuß (28) einstückig miteinander verbunden sind.

25. Wischblatt nach Anspruch 21, **dadurch gekennzeichnet, dass** das Anschlusselement (26) aus einem Kunststoff hergestellt ist.

## Claims

1. Device for detachably linking a wiper blade (12) for cleaning windows, in particular of motor vehicles, with a driven wiper arm (10) having a wiper-blade holder (50, 150), the wiper blade, which can be placed with an elongate, rubber-elastic wiper strip (18) against the window (20) having a spring-elastic supporting element (16) which is elongate in the manner of a band, is curved in the longitudinal direction over its band surfaces (15, 17) and on its lower, concave band surface (17) the wiper strip (18) is arranged parallel to the longitudinal axis, and on its outer, convex band surface is seated a connecting element (26) which has two mutually parallel wall surfaces (36) which extend in the longitudinal direction of the wiper blade and are oriented in an upright plane on the band surface, and an articulated connection permitting a swinging movement about an axis of articulation (24) being provided between the wiper arm and the wiper blade, **characterized in that** the articulated connection is used to mount an adapter (66, 166), which can be swung about the axes of articulation of the said articulated connection, on the connecting element (26), which adapter has means for connection to the wiper-blade holder (50, 150) of the wiper arm (10).

2. Device according to Claim 1, **characterized in that** a pivot (42), the longitudinal axes of which are aligned with each other, protrudes out of each wall surface (36) of the connecting element (26), and **in that** the adapter (66, 166) is mounted on the two pivots (42).

3. Device according to either of Claims 1 and 2, **characterized in that** the distance (38) between the two wall surfaces (34) is smaller than the width (46) of the supporting element (16).

4. Device according to one of Claims 1 to 3, **characterized in that** the two wall surfaces (36) are formed by the outer surfaces on the T-foot (28) of a component which is T-shaped in cross section at least in some sections and the T-head (30) of which, which faces the supporting element (16), is connected to the latter.

5. Device according to Claim 4, **characterized in that** at the mutually remote longitudinal edges of the T-head (30), the connecting element (26) is provided with claw-like extensions (32) which engage around the outer longitudinal edges of the supporting element (16).

6. Device according to either of Claims 4 and 5, **characterized in that** the connecting element (26) has, as seen in cross section, two essentially right-angled halves which, with one angled limb butting against each other, form the T-foot and the other angled limbs of which together form the T-head (30).

7. Device according to Claim 6, **characterized in that** the two halves, which consist of a metal, are connected to each other as a single piece at the T-foot (28).

8. Device according to Claim 4, **characterized in that** the connecting element (26) is produced from a plastic.

9. Device according to one of Claims 4 to 8, **characterized in that** the adapter (66, 166) has an essentially U-shaped cross section, the U-limbs (70, 170) of which engage over the T-foot (28) of the connecting element (26) in a laterally fitting manner, and the U-base (72) of which covers the T-foot (28) of the connecting element (26), and a slot-like cutout is arranged in each of the two U-limbs (70), which cutout is open at the edge towards the free ends of the said U-limbs and the slot ends of which form bearing receptacles (76, 176) for the pivot pins (42).

10. Device according to Claim 9, **characterized in that** the adapter (66, 166) is produced from a flexible plastic, and **in that** the slot-like cutouts (74) have elastically expendable narrow points (78) bounding the bearing receptacle.

11. Device according to either of Claims 9 and 10, **characterized in that** at the mutually remote outer sides of its U-limbs (70, 170) the adapter (66, 166) is provided with collar-like lugs (80) which surround the bearing receptacles (76, 176).

12. Device according to Claim 11, **characterized in that** the wiper-blade holder (50, 150) of the wiper arm (10) engages over the adapter at the U-limbs thereof in a fitting manner with side cheeks, and **in that** recesses (56, 156) which are open at the edge and are intended for the collar-like lugs (80) of the adapter are arranged in the side cheeks (54).

13. Device according to Claim 12, **characterized in that** the recesses in the side cheeks of the wiper-blade holder (50, 150) have an L-shaped design, the one L-limb being open at the edge towards the supporting element of the wiper blade and the other L-limb (60) extending towards the free end of the wiper arm, and **in that** the width (57) of the recesses (56) is matched to the outside diameter (82) of the collar-like lugs (80) of the adapter.

14. Device according to Claim 13, **characterized in that** the adapter (66, 166) is provided with a tongue (88, 204) which can be deflected elastically counter to a restoring force and on which is formed a latching shoulder which is oriented transversely with respect to the wiper blade and in an upright plane on the supporting element (16), **in that** the latching shoulder is assigned a mating latching shoulder fixed on the wiper arm, and the latching shoulder interacts with the mating latching shoulder when the collar-shaped lugs of the adapter rest against the closed ends of the other L-limbs of the recesses in the side cheeks of the wiper-blade holder.

15. Device according to Claim 14, **characterized in that** the tongue (88) is connected to at least one U-limb (70) of the adapter (66), on its side facing the driving side of the wiper arm, **in that** the latching shoulder which is assigned the mating latching shoulder (62) fixed on the wiper arm projects on that side of the tongue which faces away from the wiper blade.

16. Device according to Claim 14 **characterized in that** the tongue (204) is arranged on the U-base (72) of the adapter (166) and extends to the free end of the wiper arm, **in that** the mating latching shoulder (162) is formed on the end side of the wiper arm (10), and **in that** the tongue (204) protrudes with its latching shoulder over the free end of the wiper arm.

17. Device according to either of Claims 15 and 16, **characterized in that** at a distance from the collar-like lugs (80), the adapter is provided, at least on its one U-limb, with a lateral projection (206) which is assigned a cutout provided on the side cheeks of the wiper-blade holder.

18. Device according to one of Claims 11 to 17,
**characterized in that** on the collar-like lugs (80) at a distance from the U-limbs of the adapter are arranged shield-like coverings (84) protruding laterally over the lugs.

19. Wiper blade (12) for cleaning windows, in particular of motor vehicles, having an elongate, rubber-elastic wiper strip (18) and a spring-elastic supporting element (16) which is elongate in the manner of a band, is curved in the longitudinal direction over its band surfaces (15, 17) and on its concave band surface (17) the wiper strip (18) is arranged parallel to the longitudinal axis, and on its convex end surface is seated a connecting element (26) which has two mutually parallel wall surfaces (36) which extend in the longitudinal direction of the wiper blade and are oriented in an upright plane on the band surface, a pivot (42) protruding from each wall surface, and the longitudinal axes of the two pivots being aligned with each other, **characterized in that** an adapter (66, 166) is mounted on the two pivots (42) of the connecting element (26), which adapter can be swung about the longitudinal axes of the said pivots and has means for connection to a wiper-blade holder (50, 150) of a wiper arm (10).

20. Wiper blade according to Claim 19, **characterized in that** the distance (38) between the two wall surfaces (34) is smaller than the width (46) of the supporting element (16).

21. Wiper blade according to either of Claims 19 or 20, **characterized in that** the two wall surfaces (36) are formed by the outer surfaces on the T-foot (28) of a component (26) which is T-shaped in cross section at least in some sections and the T-head (30) of which, which faces the supporting element (16), is connected to the latter.

22. Wiper blade according to Claim 21, **characterized in that** the mutually remote longitudinal edges of the T-head (30), the connecting element (26) is provided with claw-like extensions (32) which engage around the outer longitudinal edges of the supporting element (16).

23. Wiper blade according to either of Claims 21 and 22, **characterized in that** the connecting element (26) has, as seen in cross section, two essentially right-angled halves which, with one angled limb butting against each other, form the T-foot and the other angled limbs of which together form the T-head (30).

24. Wiper blade according to Claim 23, **characterized in that** the two halves, which consist of a metal, are connected to each other as a single piece at the T-foot (28).

25. Wiper blade according to Claim 21, **characterized in that** the connecting element (26) is produced from a plastic.

## Revendications

1. Dispositif de fixation amovible d'un balai d'essuie-glace (12) pour nettoyer les vitres, en particulier, des véhicules automobiles, doté d'un bras d'essuie-glace (10) entrainé, présentant un support de balai d'essuie-glace (50, 150), le balai d'essuie-glace pouvant appliquer contre la vitre (20) une lame d'essuie-glace (18) allongée en caoutchouc élastique et présentant un élément porteur (16) en bande élastique allongée, courbé dans la direction longitudinale sur ses surfaces de bande (15, 17), et dont la surface de bande inférieure et concave (17) porte la lame d'essuie-glace (18) parallèlement à l'axe longitudinal et dont la surface convexe extérieure loge un élément de raccordement (26), qui présente deux surfaces de paroi (36) parallèles l'une à l'autre, s'étirant dans la direction longitudinale du balai d'essuie-glace et alignées dans un plan se trouvant sur la surface de bande, une liaison articulée étant prévue entre le bras d'essuie-glace et le balai d'essuie-glace permettant un mouvement de pivotement autour d'un axe articulé (24),
**caractérisé en ce que**
sur la liaison articulée un adaptateur (66, 166) pouvant pivoter autour de ses axes longitudinaux est monté sur l'élément de raccordement (26), lequel adaptateur comporte un moyen de raccordement au support de balai d'essuie-glace (50, 150) du bras d'essuie-glace (10).

2. Dispositif selon la revendication 1,
**caractérisé en ce qu'**
un pivot d'articulation (42) fait saillie de chaque surface de paroi (36) de l'élément de raccordement (26), dont les axes longitudinaux sont alignés et l'adaptateur (66, 166) est monté sur les deux pivots (42).

3. Dispositif selon l'une quelconque des revendications 1 ou 2,
**caractérisé en ce que**
la distance (38) entre les deux surfaces de paroi (34) est plus petite que la largeur (46) de l'élément porteur (16).

4. Dispositif selon l'une quelconque des revendications 1 à 3,
**caractérisé en ce que**
les deux surfaces de paroi (36) sont formées par les surfaces extérieures sur le pied en T (28) d'un composant au moins par section en forme de T en coupe transversale, et dont la tête du T (30) orientée vers l'élément porteur (16) est reliée à celui-ci.

5. Dispositif selon la revendication 4,
**caractérisé en ce que**
l'élément de raccordement (26) est pourvu de prolongements (32) en forme de griffes sur les arêtes longitudinales opposées de la tête du T (30), lesquels prolongements enveloppent les arêtes longitudinales extérieures de l'élément porteur (16).

6. Dispositif selon l'une quelconque des revendications 4 ou 5,
**caractérisé en ce que**
l'élément de raccordement (26) présente, vu en coupe transversale, deux moitiés sensiblement rectangulaires, dont une branche placée l'une contre l'autre forme le pied du T et dont chaque autre branche angulaire forme ensemble la tête du T (30).

7. Dispositif selon la revendication 6,
**caractérisé en ce que**
les deux moitiés constituées d'un métal sont reliées l'une à l'autre pour former une seule pièce sur le pied du T (28).

8. Dispositif selon la revendication 4,
**caractérisé en ce que**
l'élément de raccordement (26) est fabriqué en une matière plastique.

9. Dispositif selon l'une quelconque des revendications 4 à 8,
**caractérisé en ce que**
l'adaptateur (66, 166) présente une section transversale sensiblement en forme de U, dont les branches de U (70, 170) agrippent de manière appropriée latéralement le pied du T (28) de l'élément de raccordement (26), dont la base de U (72) recouvre le pied en T (28) de l'élément de raccordement (26), et un évidement ou fente et ayant les bords ouverts en direction de ses extrémités libres est disposé dans chacune des deux branches de U (70), évidement dont les extrémités des fentes forment des logements de palier (76, 176) pour les pivots d'articulation (42).

10. Dispositif selon la revendication 9,
**caractérisé en ce que**
l'adaptateur (66, 166) est fabriqué en une matière plastique élastique, et les évidements (74) disposent de rétrécissements (78) limiteurs pouvant être élargis de manière élastique sur les logements de palier.

11. Dispositif selon l'une quelconque des revendications 9 ou 10,
**caractérisé en ce que**
sur les côtés extérieurs opposés de sa branche de U (70, 170) l'adaptateur (66, 166) est pourvu d'épaulements du type collerette (80) entourant les logements de palier (76, 176).

12. Dispositif selon la revendication 11,
**caractérisé en ce que**
le support de balai d'essuie-glace (50, 150) du bras d'essuie-glace (10) a des parois latérales qui chevauchent l'adaptateur de manière appropriée par ses branches de U, et des évidements ouverts sur les bords (56, 156) sont disposés dans les parois latérales (54) pour les épaulements du type collerette (80) de l'adaptateur.

13. Dispositif selon la revendication 12,
**caractérisé en ce que**
les évidements dans les parois latérales du support de balai d'essuie-glace (50, 150) présentent une configuration en forme de L, l'une des branches de L étant ouverte sur les bords en direction de l'élément porteur du balai d'essuie-glace et l'autre branche de L (60) s'étendant en direction de l'extrémité libre du balai d'essuie-glace, et **en ce que** la largeur (57) des évidements (56) est adaptée au diamètre extérieur (82) des épaulements du type collerette (80) de l'adaptateur.

14. Dispositif selon la revendication 13,
**caractérisé en ce que**
l'adaptateur (66, 166) est pourvu d'une languette (88, 204) pouvant être déviée de manière élastique à l'encontre d'une force de rappel, et qui porte un épaulement d'arrêt aligné transversalement au balai d'essuie-glace et dans un plan se trouvant sur l'élément porteur (16), un contre-épaulement d'arrêt formé d'une seule pièce avec le bras d'essuie-glace est associé à l'épaulement d'arrêt et l'épaulement d'arrêt coopère avec le contre-épaulement, lorsque les épaulements du type collerette de l'adaptateur sont placés dans les parois latérales du support de balai d'essuie-glace contre les extrémités fermées des autres branches de L des évidements.

15. Dispositif selon la revendication 14,
**caractérisé en ce que**
la languette (88) est reliée par au moins une branche de U (70) de l'adaptateur (66) à son côté orienté vers le côté de l'entraînement du bras d'essuie-glace, l'épaulement d'arrêt fait saillie sur le côté de la languette opposé au balai d'essuie-glace, épaulement d'arrêt auquel est associé le contre-épaulement d'arrêt (62) formé d'une seule pièce avec le bras d'essuie-glace.

16. Dispositif selon la revendication 14,
**caractérisé en ce que**
la languette (204) est disposée sur la base de U (72) de l'adaptateur (166) et s'étend à l'extrémité libre du bras d'essuie-glace, le contre-épaulement d'arrêt (162) est formé sur la face avant du bras d'essuie-glace (10), et la languette (204) fait saillie par son épaulement d'arrêt au-dessus de l'extrémité libre du bras d'essuie-glace.

17. Dispositif selon l'une quelconque des revendications 15 ou 16,
**caractérisé en ce qu'**
à distance des épaulements du type collerette (80) au moins sur branche de U l'adaptateur est pourvu d'une partie en saillie (206) latérale, à laquelle est associé un évidement prévu sur les parois latérales du support de balai d'essuie-glace.

18. Dispositif selon l'une quelconque des revendications 11 à 17,
**caractérisé en ce que**
des revêtements (84) du type masque, faisant saillie latéralement au-dessus des épaulements sont disposés sur les épaulements du type collerette (80) à distance des branches de U de l'adaptateur.

19. Balai d'essuie-glace (12) pour nettoyer les vitres, en particulier, des véhicules automobiles doté d'une lame d'essuie-glace allongée (18) en caoutchouc élastique et d'un élément porteur (16) en bande élastique allongée, courbé dans la direction longitudinale sur ses surfaces de bande (15, 17), la lame d'essuie-glace (18) étant disposée sur la surface de bande concave (17) de l'élément porteur parallèlement à l'axe longitudinal alors qu'un élément de raccordement (26) monté sur sa surface convexe, présente deux surfaces de paroi (36) parallèles l'une à l'autre, s'étirant dans la direction longitudinale du balai d'essuie-glace, alignées dans un plan se trouvant sur la surface de bande, avec un pivot (42) d'articulation faisant saillie de chaque surface latérale et les axes longitudinaux des deux pivots (42) étant alignés les uns sur les autres,
**caractérisé en ce que**
sur les deux pivots (42) de l'élément de raccordement (26) est monté un adaptateur (66, 166) pouvant pivoter autour de leurs axes longitudinaux, lequel adaptateur comporte un moyen de raccordement à un support de balai d'essuie-glace (50, 150) d'un bras d'essuie-glace (10).

20. Balai d'essuie-glace selon la revendication 19,
**caractérisée en ce que**
la distance (38) entre les deux surfaces de paroi (34) est plus petite que la largeur (46) de l'élément porteur (16).

21. Balai d'essuie-glace selon l'une quelconque des revendications 19 ou 20,
**caractérisée en ce que**
les deux surfaces de paroi (36) sont formées par les surfaces extérieures sur le pied du T (28) d'un composant en forme de T (26) en coupe transversale du moins par section, dont la tête du T orientée vers l'élément porteur (16) est reliée est à celui-ci.

22. Balai d'essuie-glace selon la revendication 21,
**caractérisé en ce que**
l'élément de raccordement (26) est pourvu de prolongements du type collerette (32) sur les arêtes opposées longitudinales de la tête du T (30), lesquels prolongements enveloppent les arêtes longitudinales extérieures de l'élément porteur (16).

23. Balai d'essuie-glace selon l'une quelconque des revendications 21 ou 22,
**caractérisé en ce que**
l'élément de raccordement (26), vu en section transversale, présente deux moitiés sensiblement rectangulaires, dont les branches angulaires placées l'une contre l'autre forment ensemble le pied du T et dont l'autre branche angulaire forme la tête du T (30).

24. Balai d'essuie-glace selon la revendication 23,
**caractérisé en ce que**
les deux moitiés constituées d'un métal sont reliées entre elles pour former une seule pièce sur le pied du T (28).

25. Balai d'essuie-glace selon la revendication 21,
**caractérisé en ce que**
l'élément de raccordement (26) est fabriqué en matière plastique.
